# EUROPÄISCHE PATENTANMELDUNG

(11) **EP 4 279 522 A1**
(43) Veröffentlichungstag der Anmeldung: **22.11.2023**
(21) Anmeldenummer: 22173770.3
(22) Anmeldetag: 17.05.2022
(51) Int. Cl.: C08G 18/24, C08G 18/80, C08G 18/79, C08G 18/62, C09D 175/04

(54) **IN WASSER DISPERGIERBARE POLYISOCYANATE MIT ALDEHYDBLOCKIERUNG UND DARAUS ERHÄLTLICHE WÄSSRIGE ZUSAMMENSETZUNGEN**

(71) Anmelder: Covestro Deutschland AG, 51373 Leverkusen (DE)
(72) Erfinder: DORNBUSCH, Michael, 40591 Düsseldorf (DE); KNOSPE, Philipp, 46459 Rees (DE); REICHMANN, René, 41517 Grevenbroich (DE)
(74) Vertreter: Levpat

(57) **Zusammenfassung**

Die vorliegende Erfindung betrifft neue in Wasser dispergierbare, blockierte Polyisocyanate, ein Verfahren zu deren Herstellung und deren Verwendung als Vernetzer in Beschichtungsmitteln, Klebstoffen und Dichtstoffen, wässrige Zusammensetzungen enthalten diese Vernetzer, sowie die daraus erhältlichen Beschichtungen, Klebungen und Dichtungen selbst.

## Beschreibung

Die vorliegende Erfindung betrifft neue in Wasser dispergierbare, blockierte Polyisocyanate, ein Verfahren zu deren Herstellung und deren Verwendung als Vernetzer in Beschichtungsmitteln, Klebstoffen und Dichtstoffen, wässrige Zusammensetzungen enthaltend diese Vernetzer, sowie die daraus erhältlichen Beschichtungen, Klebungen und Dichtungen selbst.

Die Herstellung und Verwendung blockierter Polyisocyanate ist seit langem bekannt. Hierbei werden die freien NCO-Gruppen von Polyisocyanaten (vorübergehend) desaktiviert, um zu Produkten zu gelangen, die vorzugsweise in einkomponentig zu verarbeitenden Formulierungen eingesetzt werden können (vgl. D. A. Wicks und Z. W. Wicks Jr., Progr. Org. Coatings, vol 36, 1999, S. 148 ff und darin zitierte Literatur).

Literaturbekannte Blockierungsmittel, wie beispielsweise Alkohole, Imidazol-Derivate oder spezieller ε-Caprolactam, weisen oft hohe Deblockierungstemperatur von über 180°C auf. Hohe Deblockierungstemperaturen sind nicht nur aus Energie-effizienter Sicht sondern auch aus anwendungstechnischer Sicht von Nachteil. Besonders in Hinblick auf Anwendungen als Beschichtungsmittel von Kunststoffen und in Hinblick auf die Thermostabilität sind Systeme mit niedrigen Deblockierungstemperaturen zu bevorzugen.

Die Patentanmeldung mit der Europäischen Anmeldenummer 21180289.7 offenbart Hydroxybenzaldehyde, wie z.B. Vanillin, als Blockierungsmittel für Polyisocyanate mit niedriger Deblockierungstemperatur. Es hat sich gezeigt, dass die Polaritätsunterschiede der in dieser Anmeldung beschriebenen blockierten Polyisocyanate, im Besonderen der mit Vanillin blockierten Polyisocyanate und Wasser recht hoch sind, was die Dispergierung dieser Polyisocyanate in Wasser erschwert.

Aufgabe der vorliegenden Erfindung war die Bereitstellung von mit Hydroxybenzaldehyden, im Besonderen Vanillin, blockierten Polyisocyanaten, die sich gut in Wasser dispergieren lassen und so als Vernetzer in wässrigen Beschichtungs-, Klebstoff- und Dichtstoffzusammensetzungen Verwendung finden können.

Diese Aufgabe wurde durch eine Modifizierung der mit Hydroxybenzaldehyden blockierten Polyisocyanate mit speziellen aromatischen Sulfonaten gelöst.

WO 2012/143359 A1 beschreibt eine wässrige Zusammensetzung, die ein Wasser-emulgierbares Polyisocyanat enthält, das mit einer aliphatischen Sulfonsäure oder deren Salz hydrophiliert ist (Anspruch 1 und Seite 3; Zeile 26 bis Seite 4, Zeile 17). Aromatische Sulfonate werden nicht genannt. Die wässrige Zusammensetzung enthält als weitere Komponente einen Duftstoff, bei dem es sich um Vanillin handeln kann (Anspruch 1, Seite 5, Zeile 30 bis Seite 6, Zeile 3). Die wässrige Zusammensetzung enthält kein mit Vanillin blockiertes Polyisocyanat.

EP 3778686 A1 offenbart mit Phenolsulfonsäure oder deren Salzen hydrophilierte Polyisocyanate (Anspruch 1 und Seite 10, Abschnitte [0090] bis [0100], im Besonderen [0100]). Eine Blockierung der Polyisocyanate wird nicht beschrieben.

Gegenstand der vorliegenden Erfindung sind in Wasser dispergierbare, blockierte Polyisocyanate, erhältlich aus der Umsetzung von
A) mindestens einem Polyisocyanat, welches mindestens zwei Isocyanatgruppen aufweist,
B) mindestens einem eine Isocyanat-reaktive Gruppe aufweisenden Aldehyd der allgemeinen Formel I 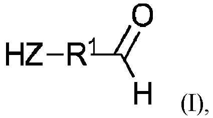 in welcher
   - R¹: ein gesättigter oder ungesättigter, linearer oder verzweigter aliphatischer, ein gegebenenfalls substituierter aromatischer, heterocyclischer, cycloaliphatischer oder araliphatischer Rest mit bis zu 18 Kohlenstoffatomen ist, der bis zu drei Heteroatome aus der Reihe Sauerstoff, Schwefel oder Stickstoff enthalten kann,
   und
   - Z: für O, S oder N(H) steht, bevorzugt für O steht,
C) mindestens einem Sulfonat ausgewählt aus der Gruppe bestehend aus Natrium-4-hydroxybenzolsulfonat, Natrium-3 -hydroxybenzolsulfonat, Natrium-5 -hydroxy-1,3-benzoldisulfonat und Hydraten dieser Verbindungen,
   und gegebenenfalls
D) einer oder mehrerer aliphatischer Verbindungen, die mindestens eine Isocyanat-reaktive Gruppe und mindestens eine Funktionalität -SO₃Y (Y= H, NH₄⁺, Metallkation) aufweisen, und/oder einer oder mehrerer Verbindungen, die mindestens eine Isocyanat-reaktive Gruppe und mindestens eine Funktionalität -COOY, -PO(OY)₂ (Y = H, NH₄⁺, Metallkation), -NR₂ oder -NR₃⁺ (R = H, Alkyl, Aryl) aufweisen,
   und/oder einer oder mehrerer Verbindungen, die mindestens eine Isocyanat-reaktive Gruppe und mindestens eine nichtionisch hydrophilierende Gruppe aufweisen.

Ein weiterer Gegenstand der vorliegenden Erfindung sind auch in Wasser dispergierbare, blockierte Polyisocyanate, umfassend
mindestens ein Strukturelement der allgemeinen Formel II 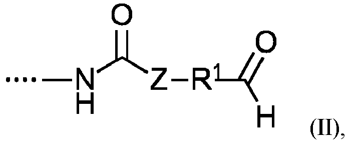 wobei Z und R1 die in Anspruch 1 genannte Bedeutung haben,
und mindestens ein Strukturelement der allgemeinen Formel III 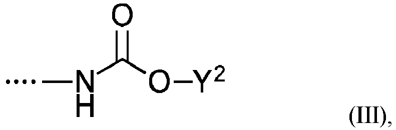 wobei Y² einem der Reste 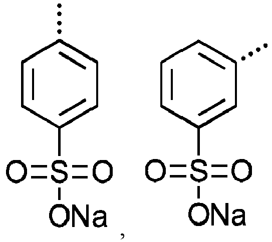 oder 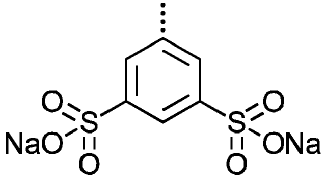 entspricht.

Gegenstand ist darüber hinaus ein Verfahren zur Herstellung von in Wasser dispergierbaren, blockierten Polyisocyanaten, umfassend die oder bestehend aus der Umsetzung von
A) mindestens einem Polyisocyanat, welches mindestens zwei Isocyanatgruppen aufweist,
B) mindestens einem eine Isocyanat-reaktive Gruppe aufweisenden Aldehyd der allgemeinen Formel I 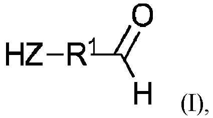 in welcher
   - R¹: ein gesättigter oder ungesättigter, linearer oder verzweigter aliphatischer, ein gegebenenfalls substituierter aromatischer, heterocyclischer, cycloaliphatischer oder araliphatischer Rest mit bis zu 18 Kohlenstoffatomen ist, der bis zu drei Heteroatome aus der Reihe Sauerstoff, Schwefel oder Stickstoff enthalten kann,
   und
   - Z: für O, S oder N(H) steht, bevorzugt für O steht,
C) mindestens einem Sulfonat ausgewählt aus der Gruppe bestehend aus Natrium-4-hydroxybenzolsulfonat, Natrium-3 -hydroxybenzolsulfonat, Natrium-5 -hydroxy-1,3-benzoldisulfonat und Hydraten dieser Verbindungen,
   und gegebenenfalls
D) einer oder mehrerer aliphatischer Verbindungen, die mindestens eine Isocyanat-reaktive Gruppe und mindestens eine Funktionalität -SO₃Y (Y= H, NH₄⁺, Metallkation) aufweisen, und/oder einer oder mehrerer Verbindungen, die mindestens eine Isocyanat-reaktive Gruppe und mindestens eine Funktionalität -COOY, -PO(OY)₂ (Y = H, NH₄⁺, Metallkation), -NR₂ oder -NR₃⁺ (R = H, Alkyl, Aryl) aufweisen,
   und/oder einer oder mehrerer Verbindungen, die mindestens eine Isocyanat-reaktive Gruppe und mindestens eine nichtionisch hydrophilierende Gruppe aufweisen.

In einer bevorzugten Ausführungsform steht R1 in Formel I bzw. II für den Rest 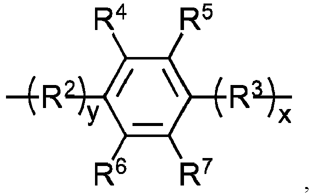 wobei
R² und R³ unabhängig voneinander für einen linearen oder verzweigten aliphatischen Rest mit bis zu 6 Kohlenstoffatomen, bevorzugt einen Methylen- oder Ethylenrest stehen,
x und y unabhängig voneinander für 0 oder 1 und bevorzugt beide für 0 stehen, und
R⁴ bis R⁷ unabhängig voneinander für Wasserstoff oder einen linearen oder verzweigten aliphatischen Rest mit bis zu 6 Kohlenstoffatomen, bevorzugt einen linearen aliphatischen Rest mit bis zu 2 Kohlenstoffatomen stehen, der Heteroatome, wie Sauerstoff, Schwefel oder Stickstoff, bevorzugt Sauerstoff, enthalten kann.

Bevorzugt stehen bis zu 2 der Reste R⁴ bis R⁷ für eine Alkoxygruppe mit bis zu 2 Kohlenstoffatomen und die übrigen dieser vier Reste für Wasserstoff.

Besonders bevorzugt stehen 1 oder 2 der Reste R⁴ bis R⁷ für eine Alkoxygruppe mit bis zu 2 Kohlenstoffatomen und die übrigen dieser vier Reste für Wasserstoff.

Ein bei der Herstellung der erfindungsgemäßen in Wasser dispergierbaren, blockierten Polyisocyanate ganz besonders bevorzugt einzusetzendes Aldehyd B der allgemeinen Formel I ist Vanilin (4-Hydroxy-3-methoxybenzaldehyd).

Die Polyisocyanatkomponente B umfasst Isocyanate mit einer Funktionalität ≥ 2. Als "Diisocyanat" wird im Rahmen der vorliegenden Erfindung eine organische Verbindung bezeichnet, die zwei Isocyanatgruppen enthält. Als "Polyisocyanat" wird eine organische Verbindung bezeichnet, die zwei oder mehr Isocyanatgruppen enthält. Diisocyanate sind daher eine Untergruppe von Polyisocyanaten.

Geeignet Polyisocyanate zur Herstellung der erfindungsgemäßen blockierten Polyisocyanate sind beispielsweise monomere Polyisocyanate. Dazu gehören beliebige monomere Diisocyanate, welche über Phosgenierung in der Flüssig- oder Gasphase oder auf phosgenfreiem Wege zugänglich sind. Bevorzugte Diisocyanate sind solche des Molekulargewichtsbereichs 140 bis 400 g/mol mit aliphatisch, cycloaliphatisch, araliphatisch und/oder aromatisch gebundenen Isocyanatgruppen, wie z. B. 1,4-Diisocyanatobutan, 1,5-Diisocyanatopentan (Pentamethylendiisocyanat, PDI), 1,6-Diisocyanatohexan (Hexamethylendiisocyanat, HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)cyclohexan, 1-Isocyanato-3,3,5 -trimethyl-5 -isocyanatomethylcyclohexan (Isophorondiisocyanat, IPDI), 4,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis(isocyanatomethyl)benzol (Xylylendiisocyanat, XDI), 1,3-und 1,4-Bis-(2-isocyanato-prop-2-yl)-benzol (Tetramethylxylylendiisocyanat , TMXDI), 2,4- und 2,6-Diisocyanatotoluol (Toluylendiisocyanat, TDI), 2,4'- und 4,4'-Diisocyanatodiphenylmethan (MDI), 1,5-Diisocyanatonaphthalin oder Mischungen aus mindestens zwei solcher Diisocyanate.

Weitere geeignete Isocyanate zur Herstellung der erfindungsgemäßen blockierten Polyisocyanate sind aliphatische, cycloaliphatische, araliphatische und aromatische Di- und Polyisocyanate mit Uretdion-, Isocyanurat-, Allophanat-, Harnstoff-, Biuret-, Iminooxadiazindion- und/oder Oxadiazintrionstrukturen. Diese können aus monomeren Di- und Polyisocyanaten der oben beschriebenen Art erhalten werden. Ihre Synthese ist beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 sowie in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 und JP 56059828 beispielhaft beschrieben sind.

Bei der Herstellung dieser Di- und Polyisocyanate schließt sich an die eigentliche Modifizierungsreaktion mit Uretdion-, Isocyanurat-, Allophanat-, Harnstoff-, Biuret-, Iminooxadiazindion- und/oder Oxadiazintrionstrukturen in der Regel ein weiterer Verfahrenschritt zur Abtrennung der nicht umgesetzten überschüssigen monomeren Isocyanate an. Diese Monomerenabtrennung erfolgt nach an sich bekannten Verfahren vorzugsweise durch Dünnschichtdestillation im Hochvakuum oder durch Extraktion mit geeigneten gegenüber Isocyanatgruppen inerten Lösemitteln, beispielsweise aliphatischen oder cycloaliphatischen Kohlenwasserstoffen wie Pentan, Hexan, Heptan, Cyclopentan oder Cyclohexan.

Bevorzugt kommen bei der Herstellung der erfindungsgemäßen blockierten Polyisocyanate Di- und Polyisocyanate mit Uretdion-, Isocyanurat-, Allophanat-, Harnstoff-, Biuret-, Iminooxadiazindion- und/oder Oxadiazintrionstrukturen der genannten Art zum Einsatz, die einen Gehalt an monomeren Diisocyanaten von weniger als 1 Gew.-%, vorzugsweise weniger als 0,5 Gew.-%, besonders bevorzugt von weniger als 0,3 Gew.-% aufweisen. Die Rest-Monomeren Gehalte werden nach DIN EN ISO 10283:2007-11 gaschromatographisch mit internem Standard gemessen.

Besonders bevorzugt als Polyisocyanatkomponente B für das erfindungsgemäße Verfahren sind Di- und Polyisocyanate mit Uretdion-, Isocyanurat-, Allophanat-, Harnstoff-, Biuret-, Iminooxadiazindion- und/oder Oxadiazintrionstrukturen der genannten Art mit ausschließlich aliphatisch und/oder cycloaliphatisch gebundenen Isocyanatgruppen.

Ganz besonders bevorzugt als Polyisocyanatkomponente B sind Di- und Polyisocyanate mit Isocyanurat- und/oder Allophanatstruktur, die ausschließlich aliphatisch und/oder cycloaliphatisch gebundene Isocyanatgruppen aufweisen, am meisten bevorzugt solche auf Basis von PDI, HDI, IPDI und/oder 4,4'-Diisocyanatodicyclohexylmethan.

Die erfindungsgemäßen in Wasser dispergierbaren, blockierten Polyisocyanate können neben den hydrophilierend wirkenden Sulfonatgruppen der Komponente C weitere, mittels Komponente D eingeführte, hydrophilierend wirkende Gruppen aufweisen.

Komponente D umfasst aliphatische Verbindungen, die mindestens eine Isocyanat-reaktive Gruppe und mindestens eine Funktionalität -SO₃Y (Y= H, NH₄⁺, Metallkation) aufweisen, Verbindungen, die mindestens eine Isocyanat-reaktive Gruppe und mindestens eine Funktionalität -COOY, - PO(OY)₂ (Y = H, NH₄⁺, Metallkation), -NR₂ oder -NR₃⁺ (R = H, Alkyl, Aryl) aufweisen, sowie Verbindungen, die mindestens eine Isocyanat-reaktive Gruppe und mindestens eine nichtionisch hydrophilierende Gruppe aufweisen. Bei den Isocyanat-reaktive Gruppen handelt es sich bevorzugt um Hydroxyl- und Aminogruppen.

Nichtionisch hydrophilierende Verbindungen sind beispielsweise einwertige, im statistischen Mittel 5 bis 70, bevorzugt 5 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4.Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan, oder Tetrahydrofurfurylalkohol; Diethylenglykol-monoalkylether wie beispielsweise Diethylenglykolmonobutylether; ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole, sowie Diethylenglykol-monoalkylether.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bevorzugt handelt es sich bei den Polyalkylenoxidpolyetheralkoholen um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen. Besonders bevorzugte Polyalkylenoxidpolyetheralkohole sind solche, die unter Verwendung der oben genannten Monoalkohole des Molekulargewichtsbereiches 32 bis 150 als Startermoleküle hergestellt wurden. Ganz besonders bevorzugte Polyetheralkohole sind reine Polyethylenglycolmonomethyletheralkohole, die im statistischen Mittel 5 bis 50, ganz besonders bevorzugt 5 bis 25 Ethylenoxideinheiten aufweisen.

Die Herstellung solcher nichtionischer hydrophilierender Verbindungen ist prinzipiell bekannt und beispielsweise in EP-B 0 206 059 und EP-B 0 540 985 beschrieben.

Bei den Verbindungen der Komponente D, die -SO₃Y, -COOY, -PO(OY)₂, -NR₂ oder -NR₃⁺-Funktionalitäten aufweisen, handelt es sich um ionisch bzw. potentiell ionisch hydrophilierende Verbindungen. Bei Wechselwirkung mit wässrigen Medien gehen die genannten Gruppen ein ggf. pH-Wert-abhängiges Dissoziationsgleichgewicht ein und können auf diese Weise negativ, positiv oder neutral geladen sein.

Bevorzugt sind diese Verbindungen mono- oder dihydroxyfunktionelle Carbon- oder Phosphonsäuren oder mono- oder dihydroxyfunktionelle aliphatische Sulfonsäuren, mono- oder diaminofunktionelle Carbon- oder Phosphonsäuren oder mono- oder diaminofunktionelle aliphatische Sulfonsäuren, die in Form innerer Salze (Zwitterionen, Betaine, Ylide) oder als Metall- oder Ammoniumsalze vorliegen können. Beispiele für die genannten ionisch bzw. potentiell ionisch hydrophilierenden Verbindungen sind Dimethylolpropionsäure, Hydroxypivalinsäure, N-(2-Aminoethyl)-β-alanin, 2-(2-Amino-ethylamino)-ethansulfonsäure, Ethylendiamin-propyl- oder butylsulfonsäure, 1,2- oder 1,3-Propylendiamin- β-ethylsulfonsäure, Lysin, 3,5-Diaminobenzoesäure, das Hydrophilierungsmittel gemäß Beispiel 1 aus der EP-A 0 916 647 und deren Alkali- und/oder Ammoniumsalze; das Addukt von Natriumbisulfit an Buten-2-diol-1,4, Polyethersulfonat, das propoxylierte Addukt aus 2-Butendiol und NaHSO₃ (z.B. in der DE-A 2 446 440, Seite 5-9, Formel I-III) sowie Verbindungen, die in kationische Gruppen überführbare, z.B. amin-basierende, Bausteine wie N-Methyl-diethanolamin als hydrophile Aufbaukomponenten enthalten. Weiterhin kann auch CAPS (Cyclohexylaminopropansulfonsäure) wie z.B. in der WO 01/88006 verwendet werden.

Besonders bevorzugte ionisch bzw. potentiell ionisch hydrophilerende Verbindungen sind N-(2-Aminoethyl)-β-alanin, 2-(2-Amino-ethylamino)-ethansulfonsäure, Dimethylolpropionsäure, des Hydrophilierungsmittels gemäß Beispiel 1 der EP-A 0 916 647, sowie deren Metall- oder Ammoniumsalze.

Die Herstellung der erfindungsgemäßen in Wasser dispergierbaren, blockierten Polyisocyanate erfolgt bevorzugt in einem Stoffmengenverhältnis der NCO-Gruppen der Komponente A zu den NCO-reaktiven Gruppen der Komponenten B bis D (Summe aus B bis D) von 0,9 bis 1:1,1, bevorzugt 1:1 bis 1:1,05, besonders bevorzugt 1:1.

Bevorzugt erfolgt die Umsetzung der NCO-Gruppen und NCO-reaktiven Gruppen bis zu einem NCO-Gehalt der erfindungsgemäßen in Wasser dispergierbaren, blockierten Polyisocyanate von ≤ 0,1 Gew.-%. Die Bestimmung des NCO-Gehaltes wird mittels FT-IR Spektroskopie an einem Lumos FTIR Mikroskop der Firma Bruker durchgeführt. Zur Bestimmung des überschüssigen NCO-Gehaltes wird die Isocyanat- Valenzschwingung zwischen 2300 und 2250 cm⁻¹ herangezogen.

Bevorzugt entfallen dann ≥ 60 bis ≤ 95 Prozent der umgesetzten NCO-Gruppen der Komponente A auf die Reaktion mit NCO-reaktiven Gruppen der Komponente B, ≥ 5 bis ≤ 40 Prozent auf die Reaktion mit NCO-reaktiven Gruppen der Komponente C und ≥ 0 bis ≤ 10 Prozent, bevorzugt ≥ 0 bis ≤ 5 Prozent, besonders bevorzugt 0 Prozent, auf die Reaktion mit NCO-reaktiven Gruppen der Komponente D.

Besonders bevorzugt entfallen dann ≥ 70 bis ≤ 85 Prozent der umgesetzten NCO-Gruppen der Komponente A auf die Reaktion mit NCO-reaktiven Gruppen der Komponente B, ≥ 15 bis ≤ 30 Prozent auf die Reaktion mit NCO-reaktiven Gruppen der Komponente C und ≥ 0 bis ≤ 10 Prozent, bevorzugt ≥ 0 bis ≤ 5 Prozent, besonders bevorzugt 0 Prozent, auf die Reaktion mit NCO-reaktiven Gruppen der Komponente D.

Die Umsetzung der NCO-Gruppen und NCO-reaktiven Gruppen erfolgt bei Temperaturen von 20 bis 120 °C, vorzugsweise bei 30 bis 100 °C, besonders bevorzugt bei 50 bis 80 °C.

Die erfindungsgemäßen in Wasser dispergierbaren, blockierten Polyisocyanate Polyisocyanate können lösemittelfrei, aber auch in Gegenwart von Lösemitteln hergestellt werden. Geeignete Lösemittel sind solche, die sich gegenüber den reaktiven Gruppen der Ausgangskomponenten inert zeigen. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Dimethylsulfoxid, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DE) und Shellsol^{®} (Deutsche Shell Chemie GmbH, Eschborn, DE) im Handel sind, Dimethylsulfoxid, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Butylglykolacetat, Butyldiglykolacetat, 1,3-Dioxolan, N-Methylpyrrolidon und N-Methylcaprolactam, oder beliebige Gemische solcher Lösemittel. Das Lösemittel kann dabei einem oder mehreren der Reaktionspartner zugegeben werden.

Die Herstellung der erfindungsgemäßen in Wasser dispergierbaren, blockierten Polyisocyanate kann unter Einsatz von Katalysatoren stattfinden. Geeignete Katalysatoren sind Metallsalze und -chelate, Salze von Übergangsmetallen oder Halbmetallen, Säuren oder Basen. Als Säuren können vorzugsweise aromatische Sulfonsäuren, wie Dodecylbenzolsulfonsäure, para-Toluolsulfonsäure, Trifluormethan-sulfonsäure und Dinonylnaphthalinsulfonsäure sein, oder Schwefelsäure, Essigsäure, Trifluoressigsäure, oder Dibutylphosphat eingesetzt werden. Als Basen können vorzugsweise N-substituierte Amidine, wie 1,5-Diazabicyclo[4.3.0]non-5-en (DBN) und 1,5-Diazabicyclo[5.4.0]undec-7-en (DBU) eingesetzt werden. Als katalytisch wirkende Metallsalze und -chelate können vorzugsweise Eisen(III)-chlorid, Aluminium-tri(ethylacetoacetat), Zinkchlorid, Zink(II)-n-octanoat, Zink(II)-2-ethyl-1-hexanoat, Zink(II)-2-ethylcaproat, Zink(II)-stearat, Zink(II)-naphthenat, Zink(II)-acetylacetonat, Zinn(II)-n-octanoat, Zinn(II)-2-ethyl-1-hexanoat, Zinn(II)-ethylcaproat, Zinn(II)-laurat, Zinn(II)-palmitat, Dibutyl-zinn(IV)-oxid, Dibutylzinn(IV)-dichlorid, Dibutylzinn(IV)-diacetat, Dibutylzinn(IV)-dimaleat, Dibutylzinn(IV)-dilaurat, Dioctylzinn(IV)-diacetat, Molybdänglykolat sowie Tetraisopropyltitanat, Tetrabutyltitanat, Titan(IV)acetylacetonat, Aluminium-tri-sec-butylat, Aluminiumacetylacetonat, Aluminiumtriflat oder Zinntriflat oder beliebige Gemische solcher Katalysatoren verwendet werden.

Ein weiterer Gegenstand der vorliegenden Erfindung ist die Verwendung der oben beschriebenen erfindungsgemäßen in Wasser dispergierbaren, blockierten Polyisocyanate als Vernetzer in Beschichtungsmitteln, Klebstoffen und Dichtstoffen, wobei es sich bevorzugt um 1-K-Systeme handelt.

Ein weiterer Gegenstand der vorliegenden Erfindung sind auch wässrige Zusammensetzungen, umfassend oder bestehend aus
E) mindestens ein/em in Wasser dispergierbares/n, blockiertes/n Polyisocyanat gemäß vorstehener Beschreibung,
F) mindestens eine/r in Wasser dispergierbare/en Hydroxylgruppen-haltige/n Verbindung und
G) Wasser.

Als Hydroxylgruppen-haltige Verbindungen F werden beliebige Polyole, die mindestens zwei Hydroxylgruppen tragen, eingesetzt. Geeignete Hydroxylgruppen-haltige Verbindungen F sind beispielsweise die üblichen aus der Polyurethanchemie bekannten Polyhydroxylverbindungen, wie z. B. Polyesterpolyole, Polyetherpolyole, Polycarbonatpolyole, Polyacrylatpolyole, Polyester- oder Poyletherpolyacrylatpolyole, Polycarbonatesterpolyurethanpolyole oder beliebige Abmischungen solcher Polyole.

Geeignete Polyesterpolyole F sind beispielsweise solche eines mittleren, aus Funktionalität und Hydroxylzahl berechenbaren Molekulargewichtes von 200 bis 3000, vorzugsweise von 250 bis 2500, mit einem Hydroxylgruppen-Gehalt von 1 bis 21 Gew.-%, vorzugsweise 2 bis 18 Gew.-%, wie sie sich in an sich bekannter Art und Weise durch Umsetzung von mehrwertigen Alkoholen mit unterschüssigen Mengen an mehrwertigen Carbonsäuren, entsprechenden Carbonsäureanhydriden, entsprechenden Polycarbonsäureestern von niederen Alkoholen oder Lactonen herstellen lassen.

Zur Herstellung dieser Polyesterpolyole geeignete mehrwertige Alkohole sind insbesondere solche des Molekulargewichtsbereichs 62 bis 400 wie z. B. 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat.

Die zur Herstellung der Polyesterpolyole F verwendeten Säuren oder Säurederivate können aliphatischer, cycloaliphatischer und/oder heteroaromatischer Natur sein und gegebenenfalls, z. B. durch Halogenatome, substituiert und/oder ungesättigt sein. Beispiele geeigneter Säuren sind beispielsweise mehrwertige Carbonsäuren des Molekulargewichtsbereichs 118 bis 300 oder deren Derivate wie beispielsweise Bernsteinsäure, Adipinsäure, Sebacinsäure, Phthalsäure, Isophthalsäure, Trimellitsäure, Phthalsäureanhydrid, Tetrahydrophthalsäure, Maleinsäure, Maleinsäureanhydrid, dimere und trimere Fettsäuren, Terephthalsäuredimethylester und Terephthalsäure-bis-glykolester.

Zur Herstellung der Polyesterpolyole F können auch beliebige Gemische dieser beispielhaft genannten Ausgangsverbindungen eingesetzt werden.

Geeignete Polyesterpolyole F sind auch solche, wie sie sich in an sich bekannter Weise aus Lactonen und einfachen mehrwertigen Alkoholen, wie z. B. den oben beispielhaft genannten, als Startermolekülen unter Ringöffnung herstellen lassen. Geeignete Lactone zur Herstellung dieser Polyesterpolyole sind beispielsweise β-Propiolacton, γ-Butyrolacton, γ- und δ-Valerolacton, ε-Caprolacton, 3,5,5- und 3,3,5-Trimethylcaprolacton oder beliebige Gemische solcher Lactone.

Die Herstellung dieser Lactonpolyester erfolgt im Allgemeinen in Gegenwart von Katalysatoren wie beispielsweise Lewis- oder Brönstedt-Säuren, organischen Zinn- oder Titanverbindungen bei Temperaturen von 20 bis 200°C, vorzugsweise 50 bis 160°C.

Geeignete Polyetherpolyole F sind beispielsweise solche eines mittleren, aus Funktionalität und Hydroxylzahl berechenbaren Molekulargewichtes von 200 bis 6000, vorzugsweise 250 bis 4000, mit einem Hydroxylgruppen-Gehalt von 0,6 bis 34 Gew.-%, vorzugsweise 1 bis 27 Gew.-%, wie sie in an sich bekannter Weise durch Alkoxylierung geeigneter Startermoleküle zugänglich sind. Zur Herstellung dieser Polyetherpolyole können beliebige mehrwertige Alkohole, beispielsweise solche des Molekulargewichtsbereichs 62 bis 400, wie sie oben bei der Herstellung von Polyesterpolyolen beschrieben werden, als Startermoleküle eingesetzt werden.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Geeignete Polyacrylatpoylole F sind beispielsweise solche eines mittleren aus Funktionalität und Hydroxylzahl berechenbaren oder durch Gelpermeationschromatografie (GPC) bestimmbaren Molekulargewichtes von 800 bis 50.000, vorzugsweise von 1000 bis 20.000, mit einem Hydroxylgruppengehalt von 0,1 bis 12 Gew.-%, vorzugsweise 1 bis 10, wie sie sich in an sich bekannter Weise durch Copolymerisation Hydroxylgruppen aufweisender olefinisch ungesättigter Monomerer mit hydroxylgruppenfreien olefinischen Monomeren herstellen lassen.

Beispiele für geeignete Monomere zur Herstellung der Polyacrylatpolyole F sind Vinyl- bzw. Vinylidenmonomere wie z.B. Styrol, a-Methylstyrol, o- bzw. p-Chlorstyrol, o-, m- oder p-Methylstyrol, p-tert.-Butylstyrol, Acrylsäure, Acrylnitril, Methacrylnitril, Acryl- und Methacrylsäureester von Alkoholen mit bis zu 18 Kohlenstoffatomen, wie z. B. Methylacrylat, Ethylacrylat, n-Propylacrylat, Isopropylacrylat, n-Butylacrylat, Isobutylacrylat, tert-Butylacrylat, Amylacrylat, Hexylacrylat, 2-Ethylhexylacrylat, Isooctylacrylat, 3,3,5-Trimethylhexylacrylat, Stearylacrylat, Laurylacrylat, Cyclopentylacrylat, Cyclohexylacrylat, 4-tert.-Butycyclohexylacrylat, Isobornylacrylat, Methylmethacrylat, Ethylmethacrylat, n-Propylmethacrylat, Isopropylmethacrylat, Butylmethacrylat, Isobutylmethacrylat, tert-Butylmethacrylat, Amylmethacrylat, Hexylmethacrylat, 2-Ethylhexylmethacrylat, Isooctylmethacrylat, 3,3,5-Trimethylhexylmethacrylat, Stearylmethacrylat, Laurylmethacrylat, Cyclopentylmethacrylat, Cyclohexylmethacrylat, 4-tert.-Butycyclohexylmethacrylat, Norbomylmethacrylat oder Isobornylmethacrylat, Diester der Fumarsäure, Itaconsäure oder Maleinsäure mit 4 bis 8 Kohlenstoffatome aufweisenden Alkoholen, Acrylsäureamid, Methacrylsäureamid, Vinylester von Alkanmonocarbonsäuren mit 2 bis 5 Kohlenstoffatomen, wie z. B. Vinylacetat oder Vinylpropionat, Hydroxyalkylester der Acrylsäure oder Methacrylsäure mit 2 bis 5 Kohlenstoffatomen im Hydroxyalkylrest, wie z. B. 2-Hydroxyethyl-, 2-Hydroxypropyl-, 3-Hydroxypropyl-, 3-Hydroxybutyl-, 4-Hydroxybutyl-, Trimethylolpropanmono- oder Pentaerythritmonoacrylat oder -methacrylat, sowie beliebige Gemische solcher beispielhaft genannter Monomere.

Als Polyesterpolyacrylatpolyole F eignen sich beispielsweise solche, wie sie gemäß EP 0 980 881 A1 erhältlich sind. Als Polycarbonatesterpolyurethanpolyole F eignen sich beispielsweise solche, wie sie in der EP 1 418 192 A1 beschrieben sind .

Bevorzugte Hydroxylgruppen-haltige Verbindungen F sind Polyesterpolyole, Polycarbonatpolyole, Polyacrylatpolyole, Polyesterpolyacrylatpolyole und/oder Polycarbonatesterpolyurethanpolyole. Zur Herstellung der wässrigen Zusammensetzung können unter Verwendung der Komponenten E bzw. F jeweils wässrige Dispersionen erzeugt werden und diese Dispersionen dann gemischt werden. Es ist auch möglich zunächst unter Verwendung nur einer der beiden Komponente E oder F nur eine wässrige Dispersion zu erzeugen und die andere Komponente dann in der so erhaltenen Dispersion zu dispergieren. Bevorzugt ist die erste Variante.

Weitere Gegenstände der vorliegenden Erfindung sind auch ein Verfahren zum Herstellen einer Beschichtung auf einem Substrat, welches mindestens folgende Schritte umfasst:
i) Aufbringen einer wässrige Zusammensetzung gemäß Anspruch 9 auf mindestens einen Teil eines zu beschichtenden Substrats und
ii) Härten der Beschichtungszusammensetzung aus Schritt i) unter Deblockierung der Komponente E,
sowie Substrate beschichtet mit einer Beschichtung, erhältlich nach diesem Verfahren.

Unter dem Begriff "Deblockierung" ist erfindungsgemäß eine durch Zufuhr von Wärme bedingte Rückspaltung der Komponente E zu verstehen, bei der das/die Aldehyd/e der Komponente B, sowie die durch dieses/diese Aldehyd/e abgebundenen Isocyanatgruppen wieder freigesetzt werden.

Die Härtungstemperaturen (Vernetzungstemperaturen) liegen bei 100 bis 170 °C, bevorzugt bei 110 bis 150°C, besonders bevorzugt bei 100 bis 140 °C.

Bevorzugt wird zur Beschleunigung der Aushärtung ein Katalysator zugegeben. Geeignete Katalysatoren sind Metallsalze und -chelate, Salze von Übergangsmetallen oder Halbmetallen, Säuren oder Basen. Als Säuren können vorzugsweise aromatische Sulfonsäuren, wie Dodecylbenzolsulfonsäure, para-Toluolsulfonsäure, Trifluormethan-sulfonsäure und Dinonylnaphthalinsulfonsäure sein, oder Schwefelsäure, Essigsäure, Trifluoressigsäure, oder Dibutylphosphat eingesetzt werden. Als Basen können vorzugsweise N-substituierte Amidine, wie 1,5-Diazabicyclo[4.3.0]non-5-en (DBN) und 1,5-Diazabicyclo[5.4.0]undec-7-en (DBU) eingesetzt werden. Als katalytisch wirkende Metallsalze und -chelate können vorzugsweise Eisen(III)-chlorid, Aluminium-tri(ethylacetoacetat), Zinkchlorid, Zink(II)-n-octanoat, Zink(II)-2-ethyl-1-hexanoat, Zink(II)-2-ethylcaproat, Zink(II)-stearat, Zink(II)-naphthenat, Zink(II)-acetylacetonat, Zinn(II)-n-octanoat, Zinn(II)-2-ethyl-1-hexanoat, Zinn(II)-ethylcaproat, Zinn(II)-laurat, Zinn(II)-palmitat, Dibutyl-zinn(IV)-oxid, Dibutylzinn(IV)-dichlorid, Dibutylzinn(IV)-diacetat, Dibutylzinn(IV)-dimaleat, Dibutylzinn(IV)-dilaurat, Dioctylzinn(IV)-diacetat, Molybdänglykolat sowie Tetraisopropyltitanat, Tetrabutyltitanat, Titan(IV)acetylacetonat, Aluminium-tri-sec-butylat, Aluminiumacetylacetonat, Aluminiumtriflat oder Zinntriflat oder beliebige Gemische solcher Katalysatoren verwendet werden.

Weitere Gegenstände der vorliegenden Erfindung sind:
Die Verwendung von wässrigen Zusammensetzungen wie vorangehend beschrieben zur Herstellung von oder als Beschichtungsmittel/n, Klebstoffe/n und Dichtstoffe/n, wobei es sich bevorzugt um 1-K-Systeme handelt.

Beschichtungen, Klebungen und Dichtungen erhältlich unter Verwendung von wässrigen Zusammensetzungen gemäß vorstehender Beschreibung.

Sofern nichts anderes angegeben ist, beziehen sich Prozentangaben auf das Gewicht.

### Experimenteller Teil

Alle Prozentangaben beziehen sich, soweit nichts Anderslautendes vermerkt, auf das Gewicht.

IR Spektren wurden mittels eines Bruker Vertex 70 FT-IR Spektrometer mit einer Auflösung von 4 cm⁻¹ aufgenommen. Der Verlauf der Blockierungsreaktion wurde anhand der Abnahme bzw. des Fehlens der Isocyanatbande (ca. 2270 cm⁻¹) im IR-Spektrum verfolgt.

Alle Lösemittel sowie 4,5-Dihydroxy-1,3-benzoldisulfonsäure Dinatriumsalz Monohydrat wurden vor Verwendung über 4 Å Molekularsieb getrocknet.

### Liste der Handelsnamen und Abkürzungen

Vanillin (Reinheit ≥ 99 %) wurde von der Firma Carl Roth () bezogen.
Dimethylsulfoxid (Reinheit ≥ 95 %) wurde von der Firma Carl Roth bezogen.
Dibutylzinndilaurat
Triethylamin
Disperbyk^{®}-181
Ethanol
Methylethylketon
4 Å Molekularsieb wurden von der Firma Carl Roth bezogen.
4,5-Dihydroxy-1,3-benzoldisulfonsäure Dinatriumsalz Monohydrat (Tiron, Reinheit ≥ 98%) wurde von der Firma Tokyo Chemical Industry (TCI) bezogen.
3-Hydroxy-napthalene-2,7-disulfonsäure Dinatriumsalz (Reinheit ≥ 85%) wurde von der Firma Tokyo Chemical Industry (TCI) bezogen.
4-Hydroxybenzolsulfonsäure Natriumsalz Dihydrat (Reinheit ≥ 98%) wurde von der Firma Tokyo Chemical Industry (TCI) bezogen.
Natrium-1-hexadecansulfonat (Reinheit ≥ 98%) wurde von der Firma Tokyo Chemical Industry bezogen.

### Desmodur^{®} N 3600 ultra (Covestro Deutschland AG)

Aliphatisches Polyisocyanat (HDI-Isocyanurat), Lieferform 100 %

| | |
|---|---|
| NCO-Gehalt: | 21,8% |
| Viskosität | ca. 3000 mPas bei 23 °C |

### Bayhydrol^{®} A 2470 (Covestro Deutschland AG)

OH-funktionelle Polyacrylatdispersion

| | |
|---|---|
| Festkörpergehalt: | 45% in Wasser/ Solventnaptha 100/ 2-Butoxyethanol |
| OH%: | 3,9 (auf Festkörper) |

### Bayhydrol^{®} A 2227/1 (Covestro Deutschland AG)

Polyester-Polyacrylat-Dispersion

| | |
|---|---|
| Festkörpergehalt: | 42% in Wasser/2-Butoxyethanol |
| OH%: | 3,8 (auf Festkörper) |

### Bayhydrol U 2757 (Covestro Deutschland AG)

Aliphatische OH-funktionelle Polycarbonatesterpolyurethan Dispersion

| | |
|---|---|
| Festkörpergehalt: | 52% in Wasser/ DMEA |
| OH%: | 1,9 (auf Festkörper) |

### Herstellung Ausgangsverbindungen

Die Herstellung der Vanillin-blockierten Dispersionen A1) bis A3) erfolgte stets über einen dreistufigen Prozess.

### 4-Hydroxybenzolsulfonsäure Natriumsalz Dihydrat modifiziertes Vanillin-Trimer A1)

Im ersten Schritt wurden 70% der NCO-Funktionalitäten des Desmodur^{®} ultra N 3600 mit Vanillin blockiert. Dafür wurden 134,1 mmol Vanillin in einem 3-Halskolben mit KPG Rührer in 418 mmol trockenem Dimethylsulfoxid gelöst. Es wurden 63,7 mmol Desmodur^{®} ultra N 3600 zugegeben. Die Mischung wurde unter Einleiten von N₂ gerührt und auf 60 °C geheizt. Es wurden 800 ppm Dibutylzinndilaurat zugegeben und die Abnahme der NCO Bande mittels IR Spektroskopie verfolgt. Nach einer Reaktionszeit von 2 bis 3 Stunden waren 30 % freie NCO-Funktionalitäten vorhanden. Im zweiten Schritt wurden die verbliebenen NCO-Funktionalitäten mit 4-Hydroxybenzolsulfonsäure Natriumsalz Dihydrat umgesetzt. Dafür wurde die Reaktionstemperatur auf 40 °C reduziert und 57,4 mmol 4-Hydroxybenzolsulfonsäure Natriumsalz Dihydrat unter Rühren zugegeben. Die Abnahme der NCO Bande wurde mittels IR Spektroskopie verfolgt. Nach 5 bis 7 Stunden war die Reaktion abgeschlossen.

Anschließend erfolgte die Neutralisation der Sulfonat Gruppen mit 3,4 mmol Triethylamin unter Rühren um einen pH von 7,2 zu erreichen. Es wurden 2,8 mmol Natrium-1-hexadecansulfonat im Produkt dispergiert und 0,2% Disperbyk-181 als Additive zugegeben.

Im dritten Schritt wurde die Dispersion mittels 362 mmol deionisiertem Wasser und unter Einsatz eines Dissolvers hergestellt. Der Festkörpergehalt der Dispersion betrug 40 %. Das Produkt wird unter N₂ gelagert.

### Stabilität: Langzeitstabilität gegeben

### Tiron modifiziertes Vanillin-Trimer A2)

Im ersten Schritt wurden 80% der NCO-Funktionalitäten des Desmodur^{®} ultra N 3600 mit Vanillin blockiert. Dafür wurden 127,5 mmol Vanillin in einem 3-Halskolben mit KPG Rührer in 589 mmol trockenem Dimethylsulfoxid gelöst. Es wurden 53,1 mmol Desmodur^{®} ultra N 3600 zugegeben. Die Mischung wurde unter Einleiten von N₂ gerührt und auf 60 °C geheizt. Es wurden 800 ppm Dibutylzinndilaurat zugegeben und die Abnahme der NCO Bande mittels IR Spektroskopie verfolgt. Nach einer Reaktionszeit von 3 bis 4 Stunden waren noch 20 % freie NCO-Funktionalitäten vorhanden.

Im zweiten Schritt wurden die verbliebenen NCO-Funktionalitäten mit 4,5-Dihydroxy-1,3-benzoldisulfonsäure Dinatriumsalz Monohydrat (Tiron) umgesetzt. Dafür wurde die Reaktionstemperatur auf 40 °C reduziert und 31,8 mmol 4,5-Dihydroxy-1,3-benzoldisulfonsäure Dinatriumsalz Monohydrat (Tiron) portionsweise unter Rühren zugegeben. Die Abnahme der NCO Bande wurde mittels IR Spektroskopie verfolgt. Bereits nach einer Zugabemenge von 70% des 4,5-Dihydroxy-1,3-benzoldisulfonsäure Dinatriumsalz Monohydrat (Tiron) konnte im IR Spektrum keine NCO-Bande mehr nachgewiesen werden. Die Reaktionsmischung gelierte teilweise und wurde unlöslich.

Neutralisation mit Triethylamin erzielte keine Verbesserung.

Die Probe wurde verworfen.

### 3-Hydroxy-napthalene-2,7-disulfonsäure Dinatriumsalz modifiziertes Vanillin-Trimer A3)

Im ersten Schritt wurden 85% der NCO-Funktionalitäten des Desmodur^{®} ultra N 3600 mit Vanillin blockiert. Dafür wurden 163 mmol Vanillin in einem 3-Halskolben mit KPG Rührer in 717 mmol trockenem Dimethylsulfoxid gelöst. Es wurden 63,9 mmol Desmodur^{®} ultra N 3600 zugegeben. Die Mischung wurde unter Einleiten von N₂ gerührt und auf 50 °C geheizt. Es wurden 800 ppm Dibutylzinndilaurat zugegeben und die Abnahme der NCO Bande mittels IR Spektroskopie verfolgt. Nach einer Reaktionszeit von 3 bis 4 Stunden waren noch 15 % freie NCO-Funktionalitäten vorhanden.

Im zweiten Schritt wurden die verbliebenen NCO-Funktionalitäten mit 3-Hydroxy-napthalene-2,7-disulfonsäure Dinatriumsalz umgesetzt. Dafür wurde die Reaktionstemperatur auf 40 °C reduziert und 28,7 mmol 3-Hydroxy-napthalene-2,7-disulfonsäure Dinatriumsalz portionsweise unter Rühren zugegeben. Es erfolgte hier keine Abnahme der NCO-Bande, da das zugegebene 3-Hydroxy-napthalene-2,7-disulfonsäure Dinatriumsalz unzurecihende Löslichkeit in der Reaktionsmischung zeigte.

Die Probe wurde verworfen.

### Anwendungstechnische Untersuchung:

Mit den Verbindungen A2) und A3) konnten keine anwendungstechnischen Untersuchungen vorgenommen werden.

Zur anwendungstechnischen Untersuchung der Verbindung A1) wurden Formulierungen enthaltend A1) sowie die wasser-basierten Bindemitteln Bayhydrol A 2470, Bayhydrol A 2227/1 oder Bayhydrol U 2757 hergestellt. Die Formulierungen wurden mittels Rakel auf verschiedene Substrate aufgezogen und bei 140 °C für 30 min ausgehärtet. Die Filmdicke nach Trocknung betrug 40 - 50 µm.

Lackfilme wurden mittels Rakel auf Stahl (DX5 1D+z), Aluminium (Typ A199,5) oder Glas Substrate aufgezogen.

Die Haftung auf Stahl wurde nach DIN EN ISO 2409 geprüft.

Die Bestimmung der Pendeldämpfung nach König erfolgte nach DIN EN ISO 1522:2007-04 auf Glasplatten.

Für den Test der Chemikalienbeständigkeiten wurden die Lösemittel Wasser (folgend auch als "H₂O" abgekürzt), Ethanol (folgend auch als "EtOH" abgekürzt), Methylethylketon (folgend auch als "MEK" abgekürzt) und Dimethylsulfoxid (folgend auch als "DMSO" abgekürzt) verwendet. Die Kontaktzeit betrug 30 Sekunden. Die Prüffläche wurde anschließend visuell und durch Verkratzung beurteilt, dabei wurde folgende Klassifikation vorgenommen: 0 = Keine Veränderung feststellbar bis 6 = Beschichtung komplett zerstört.

Impact Test erfolgte nach DIN EN 6272-1:2011 aus einer Höhe von 1 m.

Die Bestimmung der Glasübergangstemperatur T_{g} erfolgte mittels rheologischer Experimente an einem Modular Compact Rheometer MCR 102 von Anton Paar. Die Glasübergangstemperatur wurde im zweiten Heizlauf am Maximum des Verlustmoduls ermittelt.

**Tabelle 1: Formulierungen**

| | **Vergleichsbeispiel B1)** | **Patentbeispiel B2)** | **Patentbeispiel B3)** | **Patentbeispiel B4)** |
|---|---|---|---|---|
| A1) | 10 | 10 | 10 | 10 |
| Bayhydrol^{®} A 2470 | | 7,52 | | |
| Bayhydrol^{®} A 2227/1 | | | 8,26 | |
| Bayhydrol^{®} U 2757 | | | | 13,30 |

**Tabelle 2: anwendungstechnische Ergebnisse**

| | **Vergleichsbeispiel B1)** | **Patentbeispiel B2)** | **Patentbeispiel B3)** | **Patentbeispiel B4)** |
|---|---|---|---|---|
| Glasübergangstemperatur T_{g} / °C | | 68 °C | 68 °C | 23 °C |
| Impact test (1m) | Cracked | Partly cracked | Partly cracked | ok |
| Pendelhärte | 45 | 115 | 78 | 13 |
| Haftung auf Stahl | | GT = 0 | GT = 0 | GT = 0 |
| Aussehen | kristalline Bereiche | hoher Glanz, geringe Filmdefekte, leichte Gelbfärbung | hoher Glanz, geringe Filmdefekte, leichte Gelbfärbung | Elastischer Film, hoher Glanz, geringe Filmdefekte, leichte Gelbfärbung |
| Chemikalienbeständigkeit (H₂O/EtOH/MEK/ DMSO) | 3345 | 1133 | 1135 | 1145 |

Wie in Tabelle 2 dargestellt, zeigt auch Vergleichsbeispiel B1) die Ausbildung eines teilweise ausgehärteten Lackfilmes nach Aushärtung bei 140 °C für 30 Minuten. Es handelt sich hierbei um einen physikalisch getrockneten Film statt eines vernetzten Films. Im Vergleich zu Patentbeispielen B2) bis B4) ist die Chemikalienbeständigkeit limitiert.

## Patentansprüche

1. In Wasser dispergierbare, blockierte Polyisocyanate, erhältlich aus der Umsetzung von
A) mindestens einem Polyisocyanat, welches mindestens zwei Isocyanatgruppen aufweist,
B) mindestens einem eine Isocyanat-reaktive Gruppe aufweisenden Aldehyd der allgemeinen Formel I 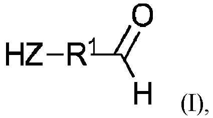 in welcher
R¹ ein gesättigter oder ungesättigter, linearer oder verzweigter aliphatischer, ein gegebenenfalls substituierter aromatischer, heterocyclischer, cycloaliphatischer oder araliphatischer Rest mit bis zu 18 Kohlenstoffatomen ist, der bis zu drei Heteroatome aus der Reihe Sauerstoff, Schwefel oder Stickstoff enthalten kann,
und
Z für O, S oder N(H) steht, bevorzugt für O steht,
C) mindestens einem Sulfonat ausgewählt aus der Gruppe bestehend aus Natrium-4-hydroxybenzolsulfonat, Natrium-3 -hydroxybenzolsulfonat, Natrium-5 -hydroxy-1,3-benzoldisulfonat und Hydraten dieser Verbindungen,
und gegebenenfalls
D) einer oder mehrerer aliphatischer Verbindungen, die mindestens eine Isocyanat-reaktive Gruppe und mindestens eine Funktionalität -SO₃Y (Y= H, NH₄⁺, Metallkation) aufweisen, und/oder einer oder mehrerer Verbindungen, die mindestens eine Isocyanat-reaktive Gruppe und mindestens eine Funktionalität -COOY, -PO(OY)₂ (Y = H, NH₄⁺, Metallkation), -NR₂ oder -NR₃⁺ (R = H, Alkyl, Aryl) aufweisen,
und/oder einer oder mehrerer Verbindungen, die mindestens eine Isocyanat-reaktive Gruppe und mindestens eine nichtionisch hydrophilierende Gruppe aufweisen.

2. Verfahren zur Herstellung von in Wasser dispergierbaren, blockierten Polyisocyanaten, umfassend die oder bestehend aus der Umsetzung von
A) mindestens einem Polyisocyanat, welches mindestens zwei Isocyanatgruppen aufweist,
B) mindestens einem eine Isocyanat-reaktive Gruppe aufweisenden Aldehyd der allgemeinen Formel I 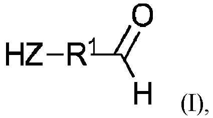 in welcher
R¹ ein gesättigter oder ungesättigter, linearer oder verzweigter aliphatischer, ein gegebenenfalls substituierter aromatischer, heterocyclischer, cycloaliphatischer oder araliphatischer Rest mit bis zu 18 Kohlenstoffatomen ist, der bis zu drei Heteroatome aus der Reihe Sauerstoff, Schwefel oder Stickstoff enthalten kann,
und
Z für O, S oder N(H) steht, bevorzugt für O steht,
C) mindestens einem Sulfonat ausgewählt aus der Gruppe bestehend aus Natrium-4-hydroxybenzolsulfonat, Natrium-3 -hydroxybenzolsulfonat, Natrium-5 -hydroxy-1,3-benzoldisulfonat und Hydraten dieser Verbindungen,
und gegebenenfalls
D) einer oder mehrerer aliphatischer Verbindungen, die mindestens eine Isocyanat-reaktive Gruppe und mindestens eine Funktionalität -SO₃Y (Y= H, NH₄⁺, Metallkation) aufweisen, und/oder einer oder mehrerer Verbindungen, die mindestens eine Isocyanat-reaktive Gruppe und mindestens eine Funktionalität -COOY, -PO(OY)₂ (Y = H, NH₄⁺, Metallkation), -NR₂ oder -NR₃⁺ (R = H, Alkyl, Aryl) aufweisen,
und/oder einer oder mehrerer Verbindungen, die mindestens eine Isocyanat-reaktive Gruppe und mindestens eine nichtionisch hydrophilierende Gruppe aufweisen.

3. In Wasser dispergierbare, blockierte Polyisocyanaten gemäß Anspruch 1, bzw. Verfahren zur Herstellung von in Wasser dispergierbaren, blockierten Polyisocyanaten gemäß Anspruch 2, wobei R1 in Formel I für den Rest 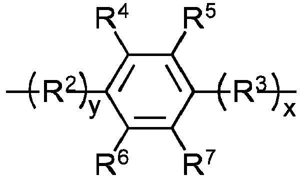 steht, wobei
R² und R³ unabhängig voneinander für einen linearen oder verzweigten aliphatischen Rest mit bis zu 6 Kohlenstoffatomen, bevorzugt einen Methylen- oder Ethylenrest stehen,
X und Y unabhängig voneinander für 0 oder 1 und bevorzugt beide für 0 stehen, und R⁴ bis R⁷ unabhängig voneinander für Wasserstoff oder einen linearen oder verzweigten aliphatischen Rest mit bis zu 6 Kohlenstoffatomen, bevorzugt einen linearen aliphatischen Rest mit bis zu 2 Kohlenstoffatomen stehen, der Heteroatome, wie Sauerstoff, Schwefel oder Stickstoff, bevorzugt Sauerstoff, enthalten kann.

4. In Wasser dispergierbare, blockierte Polyisocyanate gemäß Anspruch 3, bzw. Verfahren zur Herstellung von in Wasser dispergierbaren, blockierten Polyisocyanaten gemäß Anspruch 3, wobei bis zu 2 der Reste R⁴ bis R⁷, bevorzugt 1 oder 2 der Reste R⁴ bis R⁷, für eine Alkoxygruppe mit bis zu 2 Kohlenstoffatomen und die übrigen dieser vier Reste für Wasserstoff stehen.

5. In Wasser dispergierbare, blockierte Polyisocyanate gemäß einem der Ansprüche 1, 3 oder 4, bzw. Verfahren zur Herstellung von in Wasser dispergierbaren, blockierten Polyisocyanaten gemäß einem der Ansprüche 2 bis 4, wobei als Aldehyd B der allgemeinen Formel I Vanilin (4-Hydroxy-3-methoxybenzaldehyd) eingesetzt wird.

6. In Wasser dispergierbare, blockierte Polyisocyanate gemäß einem der Ansprüche 1 oder 3 bis 5, bzw. Verfahren zur Herstellung von in Wasser dispergierbaren, blockierten Polyisocyanaten gemäß einem der Ansprüche 2 bis 5, wobei das Polyisocyanat ausgewählt ist aus der Gruppe bestehend aus monomeren Diisocyanaten mit aliphatisch, cycloaliphatisch, araliphatisch und/oder aromatisch gebundenen Isocyanatgruppen und durch Modifizierung von monomeren aliphatischen, cycloaliphatischen, araliphatischen und/oder aromatischen Diisocyanaten erhältlichen oligomeren Di- oder Polyisocyanaten mit Uretdion-, Isocyanurat-, Allophanat-, Harnstoff-, Biuret-, Iminooxadiazindion- und/oder Oxadiazintrionstruktur.

7. In Wasser dispergierbare, blockierte Polyisocyanate gemäß einem der Ansprüche 1 oder 3 bis 6, bzw. Verfahren zur Herstellung von in Wasser dispergierbaren, blockierten Polyisocyanaten gemäß einem der Ansprüche 2 bis 6, wobei die Umsetzung der Komponenten A bis D in einem Stoffmengenverhältnis der NCO-Gruppen der Komponente A zu den NCO-reaktiven Gruppen der Komponenten B bis D von 1:1 bis 1:1,05, bevorzugt 1:1erfolgt.

8. In Wasser dispergierbare, blockierte Polyisocyanate gemäß einem der Ansprüche 1 oder 3 bis 7, bzw. Verfahren zur Herstellung von in Wasser dispergierbaren, blockierten Polyisocyanaten gemäß einem der Ansprüche 2 bis 7, wobei die Umsetzung der Komponenten A bis D bis zu einem NCO-Gehalt der in Wasser dispergierbaren, blockierten Polyisocyanate von ≤ 0,1 Gew.-Prozent erfolgt, und ≥ 60 bis ≤ 95 Prozent der dann umgesetzten NCO-Gruppen der Komponente A auf die Reaktion mit NCO-reaktiven Gruppen der Komponente B, ≥ 5 bis ≤ 40 Prozent auf die Reaktion mit NCO-reaktiven Gruppen der Komponente C und ≥ 0 bis 10 Prozent auf die Reaktion mit NCO-reaktiven Gruppen der Komponente D entfallen.

9. Verwendung der in Wasser dispergierbaren, blockierten Polyisocyanate gemäß einem der Ansprüche 1 oder 3 bis 8 als Vernetzer in Beschichtungsmitteln, Klebstoffen und Dichtstoffen, wobei es sich bevorzugt um 1-K-Systeme handelt.

10. Wässrige Zusammensetzung, umfassend oder bestehend aus
E) mindestens ein/em in Wasser dispergierbares/n, blockiertes/n Polyisocyanat gemäß einem der Ansprüche 1 oder 3 bis 8,
F) mindestens eine/r in Wasser dispergierbare/n Isocyanat-reaktive/n Komponente
und
G) Wasser.

11. Verfahren zum Herstellen einer Beschichtung auf einem Substrat, welches mindestens folgende Schritte umfasst:
i) Aufbringen einer wässrige Zusammensetzung gemäß Anspruch 9 auf mindestens einen Teil eines zu beschichtenden Substrats und
ii) Härten der Beschichtungszusammensetzung aus Schritt i) unter Deblockierung der Komponente E.

12. Verfahren gemäß Anspruch 10, wobei die Härtungstemperaturen bei 100 bis 170 °C, bevorzugt bei 110 bis 150°C, besonders bevorzugt bei 100 bis 140 °C liegen.

13. Substrate beschichtet mit einer Beschichtung, erhältlich nach einem Verfahren gemäß Anspruch 10 oder 11.

14. Verwendung von wässrigen Zusammensetzungen gemäß Anspruch 10 zur Herstellung von oder als Beschichtungsmittel/n, Klebstoffe/n und Dichtstoffe/n, wobei es sich bevorzugt um 1-K-Systeme handelt.

15. Beschichtungen, Klebungen und Dichtungen erhältlich unter Verwendung von wässrigen Zusammensetzungen gemäß Anspruch 10.
